# DEMANDE DE BREVET EUROPEEN

(11) **EP 1 241 350 A1**
(43) Date de publication de la demande: **18.09.2002**
(21) Numéro de dépôt: 02380005.5
(22) Date de dépôt: 10.01.2002
(51) Int. Cl.: F03D 7/02

(54) **Dispositif sur rotors pour le contrôle indépendant de la variation du pas de chaque pale**

(30) Priorité: 22.01.2001 ES 200100141
(71) Demandeur: FUNDACION FATRONIK, 20870 Elgoibar (Gipuzkoa) (ES)
(72) Inventeur: Azkoitia Arteche, José Miguel, 20870 Elgoibar (Gipuzkoa) (ES); Zulaica Muniain, Juan Jose, 20870 Elgoibar (Gipuzkoa) (ES)
(74) Mandataire: Urizar Barandiaran, Miguel Angel

(57) **Abrégé**

Dispositif sur rotors pour le contrôle indépendant de la variation du pas de chaque pale, qui comprend, au moins, un axe (4) cinématiquement indépendant du rotor (10) et qui porte un actionneur (9) par pale (2), un disque (6) par pale, les disques (6) étant coaxiaux au rotor (10) et disposant entre eux et entre le disque (6₃) le plus extérieur et le rotor (10) de moyens de glissement, qui permettent leur mouvement longitudinal relatif en même temps qu'ils les maintiennent solidaires en rotation, des moyens pour transmettre ce mouvement longitudinal de l'actionneur (9) au disque (6) correspondant, un multiplicateur de couple entre chaque disque (6) et la pale (2) correspondante, de sorte que ce mouvement longitudinal du disque (6) se transforme en mouvement de rotation de la pale (2) ou de la partie de celle-ci préalablement fixée.

Application prévue dans le domaine des générateurs à vent.

## Description

L'invention, qui fait l'objet d'une demande de brevet, fait mention d'un dispositif pour le contrôle individuel du pas des pales de rotors au moyen de disques multiples. Dans l'ensemble, elle est applicable à des rotors à pas variable où, au moins une pale est incorporée au rotor, son application ayant un intérêt spécial dans les générateurs à vent ou les hélicoptères.

L'action de l'invention est le fait d'un ensemble de disques, qui sont les principaux responsables de la rotation des pales sur leur base et fournissent l'angle de pas voulu indépendamment du reste des pales. La variation du pas permet de modifier l'angle d'incidence du vent ou du fluide correspondant en faisant varier ainsi les caractéristiques aérodynamiques de la pale. Les avantages de ce système de contrôle du pas sont:
- Garantir l'intégrité du moulin à vent face à des vents forts.
- Plus longue durée de vie du générateur à vent, car il supporte moins de charges dynamiques.
- Augmentation de la puissance de sortie.
- Utilisation d'un régime de vents plus bas.

L'un des objectifs d'un dispositif visant le contrôle du pas sur des rotors est celui de garantir la sécurité. Pour cela, il doit permettre à la pale de se positionner pour former un angle qui minimise l'incidence du vent sur la pale. Cette fonctionnalité est améliorée lorsqu'on emploie un dispositif individuel de contrôle du pas pour chaque pale.

À l'heure actuelle, on utilise majoritairement les dispositifs collectifs de changement de pas, autrement dit, un seul élément d'actionnement effectue le contrôle du pas de toutes les pales, en assumant le fait, quand l'une des pales ou le dispositif lui-même se bloque, de voir l'ensemble du générateur à vent ou l'appareil correspondant courir le même risque.

Même si la description faite est essentiellement liée aux générateurs à vent, son application n'est pas limitée à ceux-ci.. Elle est également utile dans d'autres domaines, tels que les hélicoptères et ce qu'on appelle les «convertibles», ainsi que sur les propulseurs navals où les avantages sont:
- Augmentation de la puissance de sortie.
- Désactivation d'un système de propulsion, afin de permettre l'emploi d'un autre, par ex., dans le cas d'un bateau à voile dont on désactive le moteur interne, en mettant les pales en position d'incidence minimale, pour naviguer à la voile.

Les mécanismes de contrôle collectif du pas ont leur origine dans les rotors pour bateaux. Toutefois, les mécanismes de contrôle collectif du pas sont limités par le couple de rotation qu'ils peuvent générer sur la base de la pale et, dans le cas des générateurs à vent, leur applicabilité est axée sur des générateurs à vent de petite et moyenne tailles, n'étant pas opérationnelle dans le cas de grands générateurs à vent (puissance>1Mw), ces derniers accroissant leur présence sur le marché.

D'un autre côté, les dispositifs connus de contrôle individuel du pas incorporent des éléments d'actionnement hydrauliques ou électromécaniques, qui emploient des collecteurs rotatifs, étant donné qu'ils sont situés dans des zones non libres de rotation. Les opérations de maintenance en sont donc fréquentes et difficiles.

En ce qui concerne les dispositifs actuels de contrôle individuel du pas, la présente invention présente une amélioration substantielle car elle met les éléments d'actionnement (électriques, hydrauliques, pneumatiques) dans la zone libre de rotation. Par conséquent, l'emploi de collecteurs rotatifs, dont la durée de vie est limitée et le fonctionnement n'est pas exempt de fuites, comme c'est le cas pour les actionneurs hydrauliques ou pneumatiques, n'est pas nécessaire.

D'autre part, l'invention maintient un niveau de coûts similaire aux solutions actuelles de contrôle indépendant du pas.

Enfin, un avantage associé aux mécanismes de contrôle indépendant du pas consiste dans la possibilité d'employer un contrôle actif des vibrations produites par le rotor, vibrations qui affectent négativement la durée de vie de la structure et des mécanismes du générateur à vent.

La présente invention préconise un dispositif sur rotors pour le contrôle indépendant de la variation du pas de chaque pale, se caractérisant par le fait qu'il se compose, au moins, de:
a) un axe cinématiquement indépendant du rotor et qui porte un actionneur par pale,
b) un disque par pale, les disques étant coaxiaux au rotor et disposant entre eux et entre le disque le plus extérieur et le rotor de moyens de glissement qui permettent leur mouvement longitudinal relatif en même temps qu'ils les maintiennent solidaires en rotation,
c) des moyens pour transmettre ce mouvement longitudinal de l'actionneur au disque correspondant,
d) un multiplicateur de couple entre chaque disque et la pale correspondante, de sorte que ce mouvement longitudinal du disque se transforme en mouvement de rotation de la pale ou la partie de celle-ci préalablement fixée.

Il se caractérise également par le fait que les moyens permettant de transmettre ce mouvement longitudinal comprennent une tige de l'actionneur, qui se prolonge dans un doigt de façon directe ou au moyen d'une plateforme intermédiaire, ce doigt disposant d'une tête qui peut glisser dans un renfoncement pratiqué dans le disque, de sorte que ce dernier et la tête soient enchâssés dans le mouvement longitudinal et non solidaires lors de la rotation.

Avec cette solution, les problèmes posés sont résolus:
- Chaque pale est actionnée indépendamment des autres, de sorte que si une pale -ou le mécanisme d'actionnement- est grippée, le reste des pales et des mécanismes continue à fonctionner normalement, ce qui permet de garantir la sécurité de l'ensemble.
- Il n'existe pas de collecteur, qui est le mécanisme exigeant le plus d'entretien et le changement le plus fréquent.

Pour mieux comprendre l'objet de la présente invention, on représente dans les plans une forme préférentielle de réalisation pratique, susceptible de changements accessoires qui n'en dénaturent pas le fondement.

La figure 1 est une vue en section d'une réalisation pratique de l'objet de l'invention.

La figure 2 est une vue du pied de pale (17) et du mécanisme multiplicateur de couple de la figure 1.

On décrit ci-dessous un exemple de réalisation pratique, non limitative, de la présente invention.

Le rotor comprend un rotor (10) proprement dit et, à son extrémité, la tête de rotor (1) sur laquelle on dispose une série de pales (2), par exemple trois pales (2₁), (2₂), (2₃), qui tournent par rapport à elle.

On dispose un axe (4) coaxial au rotor (10) et indépendant de lui, de sorte que la rotation du rotor (10) n'affecte pas l'axe (4), ce qui peut être obtenu, par exemple, avec les roulements (18).

Fixés à l'axe (4), on dispose des actionneurs (9₁), (9₂), (9₃) qui peuvent être électriques, mécaniques, hydrauliques, pneumatiques ou tout autre conventionnel, par exemple un moteur électrique pour chaque pale (2₁), (2₂), (2₃). L'axe (4) peut être creux et, à l'intérieur, peut arriver le câblage ou le conducteur d'énergie (19) pour les actionneurs (9₁), (9₂), (9₃).

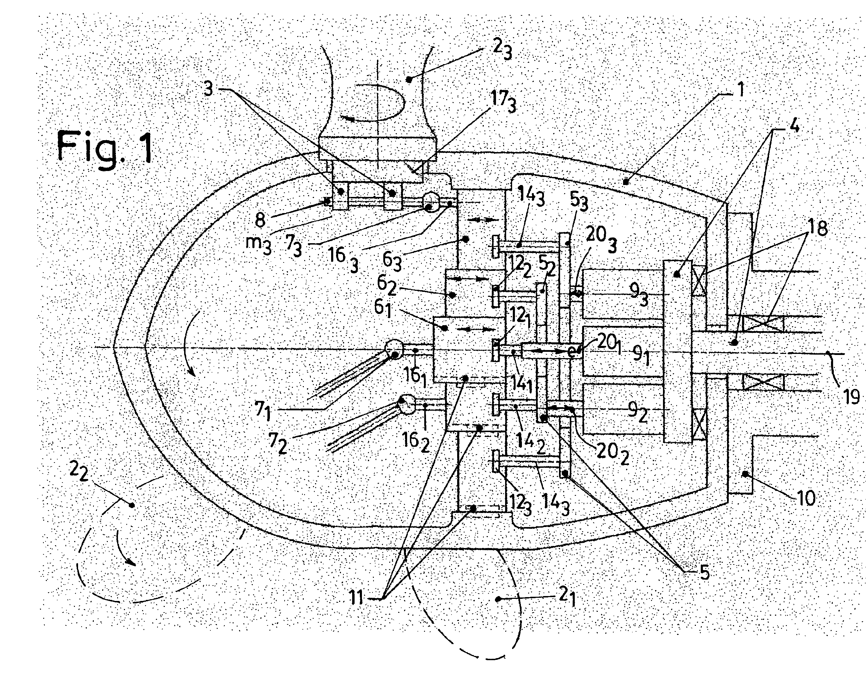

Chaque actionneur (9₁), (9₂), (9₃) agira sur un disque (6₁), (6₂), (6₃) en lui donnant un mouvement longitudinal qui, grâce à un mécanisme multiplicateur, qui n'est représenté, sur la figure 1, que par le mécanisme (m₃) correspondant au disque extérieur (6₃), pour chaque pale (2) est à l'origine de la rotation de celle-ci, étant ce qu'on appelle variation de pas ou variation d'orientation de la pale (2).

Les disques (6₁), (6₂), (6₃) sont coaxiaux et disposent entre eux et entre le disque extérieur (6₃) et la tête du rotor (1) de guides de glissement (11) qui en permettent le mouvement longitudinal pour qu'ils soient solidaires dans la rotation.

L'action des actionneurs (9₁), (9₂), (9₃) sur un disque correspondant (6₁), (6₂), (6₃) est assurée par une tige (20₁), (20₂), (20₃) soit directement, soit au moyen d'une plateforme intermédiaire (5₂), (5₃), ces plateformes (5₂), (5₃) étant coaxiales entre elles.

Chaque plataforme (5₂), (5₃) et la tige (20₁), si elle agit directement, se composent d'un ou plusieurs doigts (14₁), (14₂), (14₃) qui, enchâssés dans leur disque (6₁), (6₂), (6₃) correspondant donnent lieu à leur mouvement longitudinal.

Chaque doigt (14₁), (14₂), (14₃) se compose d'une tête (12₁), (12₂), (12₃), disposée dans un renfoncement circonférentiel pratiqué dans le disque (6₁), (6₂), (6₃) correspondant, de sorte que le disque (6) puisse tourner sans affecter la tête (12).

On apprécie clairement que la chaîne cinématique de rotation qui est la tête du rotor (1) → disques (6₁), (6₂), (6₃) n'affecte pas les actionneurs (9₁), (9₂), (9₃), ce qui permet l'absence de collecteur.

On constate également que la chaîne cinématique d'actionnement pour la variation du pas d'une pale, par exemple la pale (2₃), qui est l'actionneur (9₃) → tige (20₃) → plateforme intermédiaire (5₃) → doigt (14₃) → tête (12₃) → disque (6₃) → mécanisme multiplicateur (m₃) → pale (2₃), est indépendante pour chaque pale (2₁), (2₂), (2₃), de sorte que les problèmes sur la ligne cinématique affectant une pale n'ont pas d'incidence sur les actionnements du reste des pales.

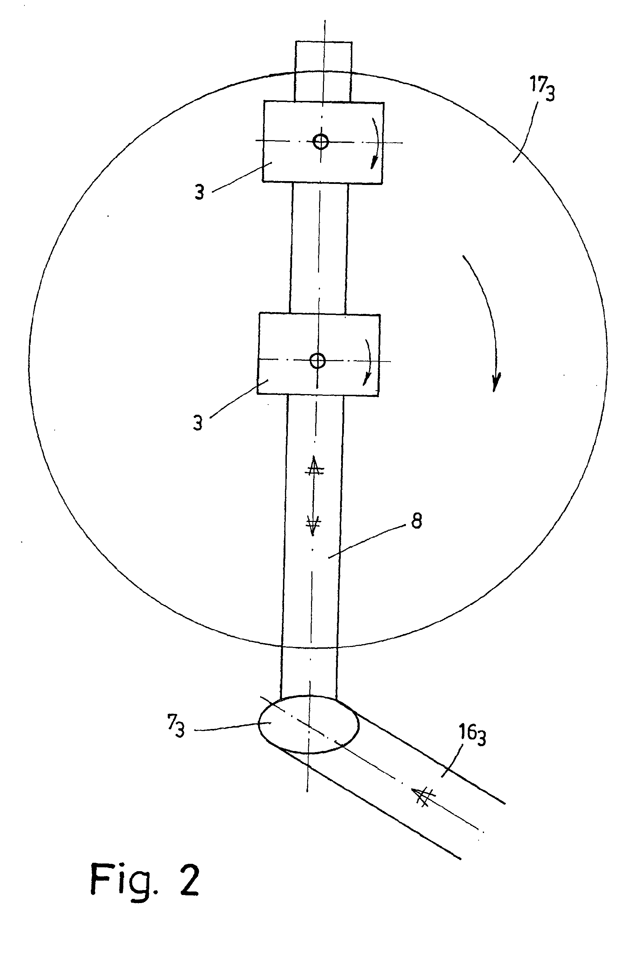

La variation du pas d'une pale exige un effort considérable, c'est pourquoi on dispose, entre chaque disque (6₁), (6₂), (6₃) et la pale (2₁), (2₂), (2₃) correspondante, un mécanisme multiplicateur de couple (m₃) -figures 1 et 2- qui est décrit ci-dessous.

Sur le pied de la pale (17₃), on fixe deux appuis (3) sur lesquels peut glisser un bras (8) qui est uni, au moyen d'une rotule (7₃), à un doigt supérieur (16₃) fixé au disque correspondant (6₃), de manière à ce que le mouvement linéaire du disque (6₃) se transforme en un mouvement de rotation pour la pale (2₃).

Les appuis (3) peuvent tourner sur leur assemblage au pied de la pale (17₃), ce qui permet d'adopter différentes positions angulaires.

Le fait de disposer de plusieurs disques (6) pour chaque pale (2), et que chaque actionneur (9) soit disposé sur un axe fixe (4) entre dans l'objet de l'invention.

Certains fabricants de pales (2) divisent la pale (2) en morceaux qui s'accouplent entre eux, la pointe de la pale étant, par exemple, indépendante du reste de la pale. Le fait que le mécanisme multiplicateur de couple (m) soit à origine de la rotation de la pale (2) complète ou seulement d'une de ses parties entre dans l'objet de l'invention. La transmission cinématique, du multiplicateur de couple (m) à la partie de la pale que l'on veut faire tourner, est bien connue et n'a pas été représentée.

Chaque actionneur est doté d'un contrôle de position au moyen d'éléments conventionnels de captage linéaire ou rotatif.

## Revendications

1. Dispositif sur rotors pour le contrôle indépendant de la variation du pas de chaque pale, se caractérisant par le fait qu'il se compose d'au moins:
a) un axe (4) cinématiquement indépendant du rotor (10) et qui porte un actionneur (9) par pale (2),
b) un disque (6) par pale, les disques (6) étant coaxiaux au rotor (10) et disposant entre eux et entre le disque (6₃) le plus extérieur et le rotor (10) de moyens de glissement, qui permettent leur mouvement longitudinal relatif en même temps qu'ils les maintiennent solidaires en rotation,
c) des moyens pour transmettre ce mouvement longitudinal de l'actionneur (9) au disque (6) correspondant,
d) un multiplicateur de couple entre chaque disque (6) et la pale (2) correspondante, de sorte que ce mouvement longitudinal du disque (6) se transforme en mouvement de rotation de la pale (2) ou de la partie de celle-ci préalablement fixée.

2. Dispositif sur rotors pour le contrôle indépendant de la variation du pas de chaque pale, selon revendication antérieure, se caractérisant par le fait que les moyens permettant de transmettre ce mouvement longitudinal se composent d'une tige (20) de l'actionneur (9), qui se prolonge dans un doigt (14) de façon directe ou au moyen d'une plateforme intermédiaire (5), ce doigt (14) disposant d'une tête (12) qui peut glisser dans un renfoncement pratiqué dans le disque (6) de manière à ce que le disque (6) et cette tête (12) demeurent enchâssés pour le mouvement longitudinal et non solidaires dans la rotation.

3. Dispositif sur rotors pour le contrôle indépendant de la variation du pas de chaque pale, selon la première revendication, se caractérisant par le fait que le multiplicateur de couple (m) se compose d'un bras (8) accouplé par glissement au pied de la pale (17), d'un doigt supérieur (16) fixé au disque (6) correspondant, d'une rotule (7) entre le bras (8) et le doigt supérieur (16).

4. Dispositif sur rotors pour le contrôle indépendant de la variation du pas de chaque pale, selon la troisième revendication, se caractérisant par le fait que le bras (8) est uni au pied de la pale (17) au moyen d'appuis (3) assemblés de façon pivotante au pied de la pale (17).

5. Dispositif sur rotors pour le contrôle indépendant de la variation du pas de chaque pale, selon la première revendication, se caractérisant par le fait que les actionneurs sont dotés d'un contrôle de position au moyen d'un mécanisme de captage linéaire ou rotatif.
